# EUROPÄISCHE PATENTANMELDUNG

(11) **EP 3 681 099 A1**
(43) Veröffentlichungstag der Anmeldung: **15.07.2020**
(21) Anmeldenummer: 19151622.8
(22) Anmeldetag: 14.01.2019
(51) Int. Cl.: H04L 9/08, G06F 21/64, H04L 29/06

(54) **VERFAHREN ZUM BETREIBEN EINES RECHNERSYSTEMS FÜR EINE AUTOMATISIERUNGSANLAGE UND/ODER FERTIGUNGSANLAGE SOWIE RECHNERSYSTEM**

(71) Anmelder: Siemens Aktiengesellschaft, 80333 München (DE)
(72) Erfinder: Heindl, Elisabeth, 90556 Cadolzburg (DE); Kohler, Benjamin, 90419 Nürnberg (DE); Milovanovic, Igor, 90491 Nürnberg (DE); Riedl, Wolfgang, 90443 Nürnberg (DE)

(57) **Zusammenfassung**

Die Erfindung betrifft ein Verfahren zum Betreiben eines Rechnersystems (1) für eine Automatisierungsanlage und/oder Fertigungsanlage, umfassend die Schritte: Vorgeben einer Blockchain (9) für die Automatisierungsanlage und/oder Fertigungsanlage, Hinterlegen eines Schlüssels in der Blockchain eine Mehrzahl von Feldgeräten (A, B, C) des Rechnersystems (1) und Verbinden der Mehrzahl von Feldgeräten (A, B, C) mit einer Cloud (5) des Rechnersystems (1), wobei bei dem Verbinden von der Mehrzahl von Feldgeräten (A, B, C) ein jeweiliger öffentlicher Schlüssel (PuA, PuB, PuC) bereitgestellt wird und mit dem hinterlegten Schlüsseln in der Blockchain (9) abgeglichen wird und wobei der jeweilige öffentliche Schlüssel (PuA, PuB, PuC) der Feldgeräte (A, B, C) in einem Chip (4) der Feldgeräte (A, B, C) gespeichert ist.

## Beschreibung

Die vorliegende Erfindung betrifft Verfahren zum Betreiben eines Rechnersystems für eine Automatisierungsanlage und/oder Fertigungsanlage. Zudem betrifft die vorliegende Erfindung ein Rechnersystem für eine Automatisierungsanlage und/oder Fertigungsanlage. Außerdem betrifft die vorliegende Erfindung ein Computerprogramm sowie einen elektronisch lesbaren Datenträger.

Das Interesse richtet sich vorliegend auf Feldgeräte. Solche Feldgeräte sind elektronische Geräte oder Module, die in der Automatisierung und der Produktionstechnik unter anderem an Feldbussen angeschlossen sind. Bereits jetzt, aber in naher Zukunft, werden Feldgeräte mit einer oder mehreren Clouds verbunden, um beispielsweise mit dem digitalen Zwilling dieses Feldgeräts zu kommunizieren. In diesem Fall ist es äußerst wichtig, dass jedes Feldgerät während des Registrierungsvorgangs eindeutig identifiziert werden kann. Viele Hersteller werden gesicherte Hardware-Chips als eindeutige Kennung in Geräte integrieren. Bei der Inbetriebnahme einer komplexen Automatisierungsanlage muss eine Vielzahl von Feldgeräten auf einmal angeschlossen werden. Dieser sogenannte manuelle Massen-Rollout verursacht Zeit und Aufwand und ist sehr fehleranfällig. Darüber hinaus ist es aus Sicherheitsgründen vorzuziehen, die Fog- und Cloud-Verbindungen und den aktuellen Verbindungsstatus des Feldgeräts zu überwachen. Besonders wenn das Feldgerät mit mehr als einem Cloud-Player agiert, ist es wichtig, die Historie und den aktuellen Zustand zu kennen.

Bisher gibt es zwei Möglichkeiten, Geräte an einem IoT-Hub (IoT - Internet of Things, Internet der Dinge) zu registrieren. Einerseits kann das Gerät den vom Hersteller eingebaute Hardware-Chip verwenden und sich während des Registrierungsvorgangs wie ein Internet-Router verhalten. Der Nachteil dieses Verhaltens ist, dass die Registrierung für jedes einzelne Gerät manuell durchgeführt werden muss.

Andererseits kann eine Reihe von Geräten über ein X509-Zertifikat für jedes Gerät registriert werden, wobei das X509-Zertifikat von einem gemeinsamen Root-Zertifikat abgeleitet wird, das für alle Geräte gültig ist. Der Nachteil dieser Methode ist, dass das zusätzliche gemeinsame Root-Zertifikat Aufwand und Kosten verursacht. Zusätzlich muss das Root-Zertifikat während des Bestehens gesichert werden und außerdem wird der Hardware-Chip nicht verwendet.

Es ist Aufgabe der vorliegenden Erfindung, eine Lösung aufzuzeigen, wie der Betrieb eines Rechnersystems, welches Feldgeräte der eingangs genannten Art und eine Cloud umfasst, einfacher und sicherer durchgeführt werden kann.

Diese Aufgabe wird erfindungsgemäß durch ein Verfahren, durch ein Rechnersystem, durch ein Computerprogramm sowie durch einen elektronisch lesbaren Datenträger mit den Merkmalen der unabhängigen Ansprüche gelöst. Vorteilhafte Weiterbildungen sind in den abhängigen Ansprüchen angegeben.

Ein erfindungsgemäßes Verfahren dient zum Betreiben eines Rechnersystems für eine Automatisierungsanlage und/oder Fertigungsanlage. Das Verfahren umfasst das Vorgeben einer Blockchain für die Automatisierungsanlage und/oder Fertigungsanlage und das Hinterlegen von Schlüsseln in der Blockchain für eine Mehrzahl von Feldgeräten. Des Weiteren umfasst das Verfahren das Verbinden der Mehrzahl von Feldgeräten mit einer Cloud des Rechnersystems, wobei bei dem Verbinden von der Mehrzahl von Feldgeräten ein jeweiliger öffentlicher Schlüssel bereitgestellt wird und mit den hinterlegten Schlüsseln in der Blockchain abgeglichen wird und wobei der jeweilige öffentliche Schlüssel der Feldgeräte in einem Chip der Feldgeräte gespeichert ist.

Mithilfe des Verfahrens soll ein Rechnersystem betrieben werden, welches einer Automatisierungsanlage und/oder Fertigungsanlage zugeordnet ist. Dieses Rechnersystem kann die Feldgeräte und die Cloud umfassen. Insbesondere dient das Verfahren dazu, die Feldgeräte in Betrieb zu nehmen. Bei den Feldgeräten kann es sich um elektronische Geräte oder Module handeln. Die Feldgeräte können Sensoren aufweisen, mit denen Messwerte bereitgestellt werden können. Ferner können die Feldgeräte Aktoren oder Stellglieder aufweisen, welche entsprechend angesteuert werden können. Die Cloud, welche auch als Rechnernetz oder Rechnerwolke bezeichnet werden kann, kann mehrere Rechner umfassen. Es kann auch vorgesehen sein, dass das Rechnersystem mehrere Clouds umfasst.

Durch das Verfahren kann die Inbetriebnahme der Feldgeräte vereinfacht werden. Zu diesem Zweck kann die Blockchain vorgegeben werden. Dies kann beispielsweise während der Planung der Automatisierungsanlage und/oder Fertigungsanlage beziehungsweise während des Engineerings erfolgen. Die Blockchain ist eine kontinuierlich erweiterbare Liste von Datensätzen beziehungsweise Blöcken, die mittels kryptographischer Verfahren miteinander verkettet sind. Dabei können die einzelnen Datensätze oder Blöcke der Blockchain nicht verändert werden. Diese Blockchain kann einen Vertrag umfassen, welcher auch als Smart Contract bezeichnet werden kann. Dieser Vertrag kann die einzelnen Mitglieder beziehungsweise Teilnehmer des Rechnersystems beschreiben. Zudem kann der Vertrag die Funktionen, die von den Mitgliedern oder Teilnehmern durchgeführt werden können, beschreiben. Vorliegend ist vorgesehen, dass die Blockchain beziehungsweise der Vertrag das Verbinden der Feldgeräte mit der Cloud beschreibt. Das Verbinden der Feldgeräte kann auch als Onboarding bezeichnet werden. Für jedes der Feldgeräte, welches zugefügt werden soll, kann hierzu in der Blockchain beziehungsweise in dem Vertrag ein Schlüssel hinterlegt sein. Dieser Schlüssel ist dem jeweiligen Feldgerät zugeordnet und kann beispielsweise von dem Hersteller des Feldgeräts bereitgestellt werden.

Bei dem Hinzufügen der jeweiligen Feldgeräte kann von den Feldgeräten der öffentliche Schlüssel bereitgestellt werden. Dieser kann dann auf Grundlage des Vertrags der Blockchain beziehungsweise die in der Blockchain hinterlegten Schlüssel verifiziert werden. Somit kann garantiert werden, dass nur die Feldgeräte mit dem gültigen öffentlichen Schlüssel hinzugefügt werden können. Nach dem Hinzufügen können die jeweiligen Feldgeräte dann mit der Cloud verbunden werden. Dabei ist es gemäß der Erfindung vorgesehen, dass der jeweilige öffentliche Schlüssel eines Feldgeräts in einem Chip beziehungsweise Hardware-Chip des Feldgeräts gespeichert ist. Insbesondere handelt es sich bei dem Chip um ein sogenanntes Trusted Platform Module (TPM). Somit ist der öffentliche Schlüssel in dem Chip gespeichert und kann nicht verändert werden. Insgesamt kann somit eine einfache Verbindung der Feldgeräte mit der Cloud ermöglicht werden. Die Sicherheit kann hierbei einerseits durch die Verwendung der Blockchain und andererseits durch die auf dem Chip gespeicherten öffentlichen Schlüssel erreicht werden.

Bevorzugt werden mittels der Cloud Einträge der Blockchain, welche die verbundenen Feldgeräte beschreiben, überprüft. Beispielsweise kann die Cloud beziehungsweise die entsprechenden Partner in der Cloud eine Benachrichtigung erhalten, wenn die Feldgeräte hinzugefügt wurden. Im Anschluss daran kann die Cloud dann einen Handshake für die Verbindung der Feldgeräte mit der Cloud starten. Somit kann die Datenübertragung zwischen den Feldgeräten und der Cloud gesteuert werden.

In einer weiteren Ausführungsform wird anhand des öffentlichen Schlüssels der jeweiligen Feldgeräte eine verschlüsselte Kommunikation zwischen den jeweiligen Feldgeräten und der Cloud aufgebaut wird. Nach dem Verbinden eines Feldgeräts mit der Cloud kann dem Feldgerät und/oder der Cloud ein Geheimnis gekannt sein. Dieses Geheimnis kann beispielsweise ein Sitzungsschlüssel (Session Key) sein, der für das Feldgerät bestimmt wird. Dieses Geheimnis kann mit dem öffentlichen Schlüssel des Feldgeräts verschlüsselt werden und von der Cloud zu dem Feldgerät übertragen werden. Dieses Geheimnis kann dazu verwendet werden, Nachrichten von der Cloud zu dem Gerät und/oder von dem Gerät zu der Cloud zu verschlüsseln. Auf diese Weise kann eine sichere Datenübertragung zwischen den Feldgeräten und der Cloud ermöglicht werden.

Weiterhin ist es vorteilhaft, wenn Daten von den Feldgeräten zu der Cloud und/oder Daten von der Cloud zu den Feldgeräten übertragen werden. Es kann beispielsweise vorgesehen sein, dass mit den Feldgeräten oder einigen Feldgeräten fortlaufend Sensordaten oder Messwerte bereitgestellt werden. Diese Daten können dann von den Feldgeräten an die Cloud übertragen werden. In der Cloud können diese Daten dann entsprechend ausgewertet werden. Es kann auch vorgesehen sein, dass Daten von der Cloud an die jeweiligen Feldgeräte übertragen werden. Es können auch Programmdaten von der Cloud zu den jeweiligen Feldgeräten übertragen werden. Auf diese Weise kann ein Firmware-Update durchgeführt werden. In der Cloud kann auch ein digitaler Zwilling eines Feldgeräts vorhanden sein. Zwischen dem Feldgerät und seinem digitalen Zwilling kann somit einen Datenaustausch ermöglicht werden.

In einer weiteren Ausführungsform wird das Verbinden der jeweiligen Feldgeräte in separaten Transaktionen der Blockchain durchgeführt. In dem Vertrag der Blockchain können unterschiedliche Funktionen oder Transaktionen definiert sein. Zudem kann in dem Vertrag definiert sein, welche Komponente des Rechnersystems berechtigt ist, die jeweiligen Funktionen durchzuführen. Für das Hinzufügen der Feldgeräte können entsprechende Funktionen in dem Vertrag der Blockchain hinterlegt sein. Auch für das Verbinden der jeweiligen Feldgeräte können in der Blockchain entsprechende Funktionen in dem Vertrag der Blockchain hinterlegt sein. Zudem können für das Trennen der jeweiligen Feldgeräte und/oder für das Entfernen der jeweiligen Feldgeräte Funktionen in dem Vertrag der Blockchain hinterlegt sein. Es ist insbesondere vorgesehen, dass beispielsweise das Hinzufügen und/oder das Verbinden der Feldgeräte in einem einzigen Schritt durchgeführt wird. In diesem Schritt können die jeweiligen Funktionen, die das Hinzufügen und/oder Verbinden der jeweiligen Feldgeräte beschreiben, durchgeführt werden. Auf diese Weise kann die Inbetriebnahme der Feldgeräte deutlich vereinfacht werden und es können Fehler vermieden werden.

In einer weiteren Ausgestaltung wird von den jeweiligen Feldgeräten zudem eine Adresse bereitgestellt. Insbesondere ist vorgesehen, dass von den jeweiligen Feldgeräten eine IP-Adresse bereitgestellt wird. Die jeweiligen IP-Adressen der Feldgeräte können zudem in dem Vertrag der Blockchain hinterlegt sein. Diese IP-Adressen können bei dem Verbinden der Feldgeräte überprüft werden. Zudem könne die IP-Adressen von der Cloud abgefragt werden. Somit können die jeweiligen Feldgeräte entsprechend adressiert werden.

In einer weiteren Ausführungsform beschreibt die Blockchain Mitglieder und Teilnehmer in dem Rechnersystem sowie die für die Mitglieder und Teilnehmer erlaubten Funktionen. In dem Vertrag der Blockchain können die jeweiligen Komponenten des Rechnersystems definiert sein. Dabei können die Komponenten in Mitglieder und in Teilnehmer eingeteilt werden. Zudem können die Funktionen definiert sein, die von den Mitgliedern und Teilnehmer ausgeführt werden können. Die Funktionen können beispielsweise das Hinzufügen, das Verbinden, das Trennen und/oder das Entfernen der Feldgeräte beschreiben. Grundsätzlich können die Mitglieder für alle Funktionen berechtigt sein. Insbesondere ist es vorgesehen, dass zumindest drei Mitglieder vorhanden sind. Wenn in der Blockchain eine Funktion oder ein Block hinzugefügt werden soll, können diese zumindest drei Mitglieder darüber abstimmen. Ein Mitglied kann beispielsweise ein Ingenieur oder ein Rechner des Ingenieurs sein. Die Teilnehmer können nur für bestimmte Funktionen berechtigt sein. Auf diese Weise kann die Sicherheit gewährleistet werden.

In einer weiteren Ausführungsform wird ein privater Schlüssel, welcher in dem Chip der jeweiligen Feldgeräte gespeichert ist, zum Entschlüsseln von Nachrichten verwendet. In dem Chip beziehungsweise in dem TPM können also der öffentliche Schlüssel und der private Schlüssel gespeichert sein. Dieses Schlüsselpaar kann für eine asymmetrische Verschlüsselung verwendet werden. Somit kann das Feldgerät verschlüsselte Daten, die an das Feldgerät übermittelt werden, entschlüsseln. Dadurch, dass der private Schlüssel in dem Hardware-Chip hinterlegt ist, ist dieser besonders sicher.

Ein erfindungsgemäßes Rechnersystem für eine Automatisierungsanlage und/oder Fertigungsanlage, umfasst eine Mehrzahl von Feldgeräten. Darüber hinaus umfasst das Rechnersystem zumindest einen Rechner zum Vorgeben einer Blockchain für die Automatisierungsanlage und/oder Fertigungsanlage, wobei der zumindest eine Rechner dazu ausgebildet ist, in der Blockchain für die Mehrzahl von Feldgeräten Schlüssel zu hinterlegen. Des Weiteren umfasst das Rechnersystem eine Cloud, wobei für ein Verbinden der Mehrzahl von Feldgeräten mit einer Cloud, die jeweiligen Feldgeräte einen öffentlichen Schlüssel bereitstellen, wobei der jeweilige öffentliche Schlüssel der Feldgeräte in einem Chip der Feldgeräte gespeichert ist. Darüber hinaus ist der zumindest eine Rechner dazu ausgebildet, die jeweils bereitgestellten öffentlichen Schlüssel mit den hinterlegten Schlüsseln in der Blockchain abzugleichen.

Der zumindest eine Rechner, mit dem die Blockchain vorgegeben wird, kann beispielsweise einem Ingenieur zugeordnet sein. Dieser kann während des Engineerings die Blockchain vorgeben. Es kann auch vorgesehen sein, der der Rechner einem Mitarbeiter zur Kommissionierung zugeordnet ist. Von diesem Mitarbeiter kann das Rechensystem in Betrieb der Anlage überprüft werden.

Ein erfindungsgemäßes Computerprogramm ist direkt in einen Speicher eines Rechnersystems ladbar. Das Computerprogramm umfasst Programm-Mitteln, um die Schritte des Verfahrens des erfindungsgemäßen Verfahrens und der vorteilhaften Ausgestaltungen davon auszuführen, wenn das Programm in dem Rechnersystem ausgeführt wird.

Ein erfindungsgemäßer elektronisch lesbarer Datenträger umfasst darauf gespeicherte elektronisch lesbaren Steuerinformationen, welche zumindest ein erfindungsgemäßes Computerprogramm umfassen und derart ausgestaltet sind, dass sie bei Verwendung des Datenträgers in einem Rechensystem ein erfindungsgemäßes Verfahren und die vorteilhaften Ausgestaltungen davon durchführen.

Die mit Bezug auf das erfindungsgemäße Verfahren vorgestellten bevorzugten Ausführungsformen und deren Vorteile gelten entsprechend für das erfindungsgemäße Rechnersystem, für das erfindungsgemäße Computerprogramm sowie für den erfindungsgemäßen elektronisch lesbaren Datenträger.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen.

Die Erfindung wird nun anhand von bevorzugten Ausführungsbeispielen sowie unter Bezugnahme auf die beigefügten Zeichnungen näher erläutert.
- FIG 1: eine schematische Darstellung eines Rechnersystems für Automatisierungsanlage und/oder Fertigungsanlage, wobei das Rechnersystem eine Cloud und eine Mehrzahl von Feldgeräten aufweist; und
- FIG 2: ein schematisches Ablaufdiagramm, welches den Betrieb der einzelnen Komponenten des Rechnersystems beschreibt.

In den Figuren werden gleiche oder funktionsgleiche Elemente mit den gleichen Bezugszeichen versehen.

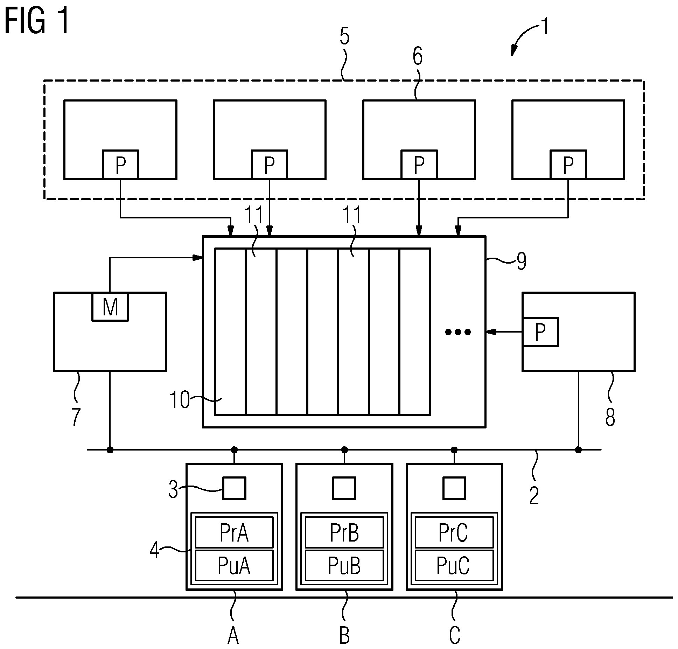

FIG 1 zeigt in einer schematischen Darstellung ein Rechnersystem 1, welches in einer Automatisierungsanlage und/oder Fertigungsanlage eingesetzt werden kann. Dieses Rechnersystem 1 umfasst eine Mehrzahl von Feldgeräten A, B, C. In dem vorliegenden vereinfachten Beispiel sind der Übersichtlichkeit halber drei Feldgeräte A, B, C dargestellt. Die jeweiligen Feldgeräte A, B, C sind mit einem Netzwerk 2, beispielsweise mit einem Ethernet-Netzwerk, miteinander zur Datenübertagung verbunden. Die jeweiligen Feldgeräte A, B, C können Sensoren aufweisen, mit denen im Betrieb der Anlage Messdaten bereitgestellt werden können. Alternativ oder zusätzlich können die Feldgeräte A, B, C Aktoren aufweisen, welche entsprechende Steuerungsdaten empfangen können. Außerdem können die Feldgeräte A, B, C Analysedaten und/oder Alarmdaten bereitstellen.

Die jeweiligen Feldgeräte A, B, C umfassen einen Chip 4, welcher insbesondere als sogenanntes Trusted Platform Module (TPM) ausgebildet ist. Auf den jeweiligen Chips 4 der Feldgeräte A, B, C sind Schlüssel PrA, PuA, PrB, PuB, PrC, PuC gespeichert. Auf dem Chip 4 des Feldgeräts A ist ein privater Schlüssel PrA des Feldgeräts A und ein öffentlicher Schlüssel PuA des Feldgeräts A gespeichert. Ferner sind auf dem Chip 4 des Feldgeräts B ein privater Schlüssel PrB des Feldgeräts B und ein öffentlicher Schlüssel PuB des Feldgeräts B gespeichert. Zudem sind auf dem Chip 4 des Feldgeräts C ein privater Schlüssel PrC des Feldgeräts C und ein öffentlicher Schlüssel PuC des Feldgeräts C gespeichert. Darüber hinaus ist den Feldgeräten A, B, C eine jeweilige IP-Adresse 3 zugeordnet.

Des Weiteren umfasst das Rechnersystem 1 eine Cloud 5, welche wiederum mehrere Komponenten 6 umfasst. Bei den Komponenten 6 kann es sich um Rechnernetze oder einzelne Rechner handeln. Darüber hinaus umfasst das Rechnersystem 1 einen Rechner 7, welcher einem Ingenieur zugeordnet ist. Dieser Rechner 7 hat einen direkten Zugriff auf das Netzwerk 2. Außerdem umfasst das Rechnernetz 1 einen Rechner 8, welcher Mitarbeitern für die Kommissionierung der Automatisierungs- und/oder Fertigungsanlage zugeordnet ist.

Während des Engineerings wird von dem Ingenieur eine Blockchain 9 speziell für die Automatisierungs- und/oder Fertigungsanlage erzeugt. Die Blockchain 9 umfasst einen Vertrag 10, welcher von dem Ingenieur vorgegeben wird und welcher auch als Smart Contract bezeichnet werden kann. In dem Vertrag 10 sind die bereits bekannte Mitglieder M (Member) und Teilnehmer P (Participants) des Rechnersystems 1 definiert. Zudem sind in der Blockchain 9 Funktionen 11 definiert. Diese Funktionen 11 können beispielsweise das Hinzufügen der Feldgeräte A, B, C betreffen. Zudem können die Funktionen 11 das Entfernen der Feldgeräte A, B, C betreffen. Außerdem können die Funktionen 11 das Verbinden der Feldgeräte A, B, C betreffen, wobei das Verbinden auch als Onboarding bezeichnet werden kann. Zudem können die Funktionen 11 das Trennen der Feldgeräte A, B, C betreffen, wobei das Trennen auch als Offboarding bezeichnet werden kann. Ferner beschreibt der Vertrag 10 der Blockchain 9, ob die Mitglieder M und/oder Teilnehmer P für die jeweiligen Funktionen 11 berechtigt sind. Für das Hinzufügen und Entfernen von Feldgeräten A, B, C kann beispielsweise nur ein Mitglied M berechtigt sein. Für das Verbinden und Trennen der Feldgeräte A, B, C können auch die Teilnehmer P berechtigt sein. In dem vorliegenden Beispiel ist nur der Rechner 7 des Ingenieurs als Mitglied M definiert. Die übrigen Komponenten des Rechnersystems 1 sind Teilnehmer P.

Die Mitglieder M und Teilnehmer P können von dem Ingenieur zu der Blockchain 9 eingeladen werden. Danach werden die IP-Adressen 3 der jeweiligen Feldgeräte A, B, C und die jeweiligen öffentlichen Schlüssel PuA, PuB, PuC der Feldgeräte A, B, C angefordert. Diese Anforderung kann entweder durch den Rechner 7 des Ingenieurs oder den Rechner 8 der Mitarbeiter für die Kommissionierung erfolgen.

Die jeweiligen öffentlichen Schlüssel PuA, PuB, PuC und die IP-Adressen 3 der jeweiligen Feldgeräte A, B, C werden für die Funktionen 11 des Hinzufügens der Feldgeräte A, B, C, welche in dem Vertrag 10 der Blockchain 9 beschrieben sind, benötigt. Für das Hinzufügen der jeweiligen Feldgeräte A, B, C werden die hierzu in der Blockchain 9 definierten Funktionen 11 durchlaufen. Dabei werden Schlüssel, die in der Blockchain hinterlegt sind, mit den öffentlichen Schlüsseln PuA, PuB, PuC der Feldgeräte A, B, C abgeglichen. Zudem werden die Feldgeräte A, B, C mit der Cloud 5 verbunden.

Nach dem Onboarding der Feldgeräte A, B, C werden die jeweiligen Komponenten 6 aus der Cloud 5 von der Blockchain 9 über das Hinzufügen und/oder Verbinden der Feldgeräte A, B, C benachrichtigt. Infolge dieser Benachrichtigung startet das Cloud-Portal einen entsprechenden Handshake mit den Feldgeräten A, B, C. Dies ist durch den Vertrag 10 der Blockchain 9 geschützt, der den Rechner 5 des Ingenieurs und die Komponenten 6 der Cloud 5 als autorisierte Teilnehmer identifiziert. Nach dem Onboarding besitzen die Feldgeräte A, B, C und die Cloud 5 gemeinsames Geheimnis, beispielsweise einen Sitzungsschlüssel. Dieses Geheimnis kann dazu verwendet werden, Daten zwischen den Komponenten 6 der Cloud 5 sowie den Feldgeräten A, B, C auszutauschen.

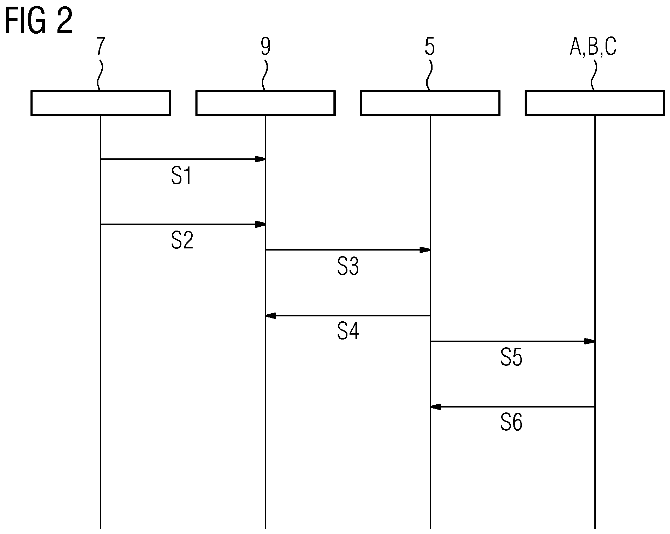

FIG 2 zeigt in einem schematischen Ablaufdiagramm den Betrieb der einzelnen Komponenten des Rechnersystems 1. In einem Schritt S1 wird ausgehend von dem Rechner 7 des Ingenieurs die einzelnen Funktionen 11 für die Blockchain 9 definiert. Hierbei werden die Schlüssel hinterlegt, die mit den öffentlichen Schlüsseln PuA, PuB, PuC der Feldgeräte A, B, C verglichen werden. Zudem werden die IP-Adressen 3 hinterlegt, die mit den IP-Adressen 3 der Feldgeräte A, B, C verglichen werden. In einem Schritt S2 werden die Feldgeräte A, B, C hinzugefügt und mit der Cloud 5 verbunden. Hierbei werden die öffentlichen Schlüssel PuA, PuB, PuC der Feldgeräte A, B, C verifiziert.

In einem Schritt S3 wird die Cloud 5, beziehungsweise die einzelnen Komponenten 6 der Cloud 5, über das Onboarding der Feldgeräte A, B, C informiert. In einem Schritt S4 kann die Cloud 5 die Blockchain 9 dahingehend überprüfen, ob Feldgeräte A, B, C hinzugefügt wurden. Zudem können die IP-Adressen 3 der hinzugefügten Feldgeräte A, B, C gelesen werden. Nach dem Verbinden der Feldgeräte A, B, C mit der Cloud 5 wird das hierbei erzeugte Geheimnis mit dem öffentlichen Schlüsseln PuA, PuB, PuC der Feldgeräte A, B, C verschlüsselt und in einem Schritt S5 an die Feldgeräte A, B, C übertragen. In einem Schritt S6 werden dann Daten oder Nachrichten von den Feldgeräten A, B, C mit dem Geheimnis verschlüsselt und an die Cloud 5 übertragen.

Insgesamt können somit eine Vielzahl von Feldgeräte A, B, C auf einfache Weise in einem Schritt mit der Cloud 5 verbunden werden. Die erforderliche Sicherheit wird dabei einerseits dadurch gewährleistet, dass die Schlüssel PrA, PuA, PrB, PuB, PrC, PuC der Feldgeräte A, B, C in dem Hardware-Chip gespeichert sind. Andererseits wird die Sicherheit durch die Verwendung der Blockchain gewährleistet.

## Patentansprüche

1. Verfahren zum Betreiben eines Rechnersystems (1) für eine Automatisierungsanlage und/oder Fertigungsanlage, umfassend die Schritte:
- Vorgeben einer Blockchain (9) für die Automatisierungsanlage und/oder Fertigungsanlage,
- Hinterlegen von Schlüssels in der Blockchain für eine Mehrzahl von Feldgeräten (A, B, C) des Rechnersystems (1) und
- Verbinden der Mehrzahl von Feldgeräten (A, B, C) mit einer Cloud (5) des Rechnersystems (1),
- wobei bei dem Verbinden von der Mehrzahl von Feldgeräten (A, B, C) ein jeweiliger öffentlicher Schlüssel (PuA, PuB, PuC) bereitgestellt wird und mit den hinterlegten Schlüsseln in der Blockchain (9) abgeglichen wird und
- wobei der jeweilige öffentliche Schlüssel (PuA, PuB, PuC) der Feldgeräte (A, B, C) in einem Chip (4) der Feldgeräte (A, B, C) gespeichert ist.

2. Verfahren nach Anspruch 1, **dadurch gekennzeichnet, dass** mittels der Cloud (5) Einträge der Blockchain (9), welche die hinzugefügten Feldgeräte (A, B, C) beschreiben, überprüft werden.

3. Verfahren nach Anspruch 1 oder 2, **dadurch gekennzeichnet, dass** anhand des öffentlichen Schlüssels (PuA, PuB, PuC) der jeweiligen Feldgeräte (A, B, C) eine verschlüsselte Kommunikation zwischen den jeweiligen Feldgeräten (A, B, C) und der Cloud (5) aufgebaut wird.

4. Verfahren nach Anspruch 3, **dadurch gekennzeichnet, dass** Daten von den Feldgeräten (A, B, C) zu der Cloud (5) und/oder Daten von der Cloud (5) zu den Feldgeräten (A, B, C) übertragen werden.

5. Verfahren nach einem der vorhergehenden Ansprüche, **dadurch gekennzeichnet, dass** das Verbinden der jeweiligen Feldgeräte (A, B, C) in separaten Transaktionen der Blockchain (9) durchgeführt wird.

6. Verfahren nach einem der vorhergehenden Ansprüche, **dadurch gekennzeichnet, dass** von den jeweiligen Feldgeräten (A, B, C) zudem eine Adresse (3) bereitgestellt wird.

7. Verfahren nach einem der vorhergehenden Ansprüche, **dadurch gekennzeichnet, dass** die Blockchain (9) Mitglieder (M) und Teilnehmer (P) in dem Rechnersystem (1) sowie für die Mitglieder (M) und Teilnehmer (P) erlaubte Funktionen (11) beschreibt.

8. Verfahren nach einem der vorhergehenden Ansprüche, **dadurch gekennzeichnet, dass** ein privater Schlüssel (PrA, PrB, PrC), welcher in dem Chip (4) der jeweiligen Feldgeräte (A, B, C) gespeichert ist, zum Entschlüsseln von Nachrichten verwendet wird.

9. Rechnersystem (1) für eine Automatisierungsanlage und/oder Fertigungsanlage, umfassend:
- eine Mehrzahl von Feldgeräten (A, B, C),
- zumindest einen Rechner (7) zum Vorgeben einer Blockchain (9) für die Automatisierungsanlage und/oder Fertigungsanlage, wobei der zumindest eine Rechner (7) dazu ausgebildet ist, in der Blockchain (9) für die Mehrzahl von Feldgeräten (A, B, C) Schlüssel zu hinterlegen und
- eine Cloud (5), wobei für ein Verbinden der Mehrzahl von Feldgeräten (A, B, C) mit einer Cloud (5), die jeweiligen Feldgeräte (A, B, C) einen öffentlichen Schlüssel (PuA, PuB, PuC) bereitstellen, wobei der jeweilige öffentliche Schlüssel (PuA, PuB, PuC) der Feldgeräte (A, B, C) in einem Chip (4) der Feldgeräte (A, B, C) gespeichert ist, und
- wobei der zumindest eine Rechner (7) dazu ausgebildet ist, die jeweils bereitgestellten öffentlichen Schlüssel (PuA, PuB, PuC) mit den hinterlegten Schlüsseln in der Blockchain (9) abzugleichen.

10. Computerprogramm, welches direkt in einen Speicher eines Rechnersystems (1) ladbar ist, mit Programm-Mitteln, um die Schritte des Verfahrens nach einem der Ansprüche 1 bis 8 auszuführen, wenn das Programm in dem Rechnersystem (1) ausgeführt wird.

11. Elektronisch lesbarer Datenträger mit darauf gespeicherten elektronisch lesbaren Steuerinformationen, welche zumindest ein Computerprogramm nach Anspruch 10 umfassen und derart ausgestaltet sind, dass sie bei Verwendung des Datenträgers in einem Rechensystem (1) ein Verfahren nach einem der Ansprüche 1 bis 8 durchführen.
